# EUROPÄISCHE PATENTANMELDUNG

(11) **EP 1 345 467 A2**
(43) Veröffentlichungstag der Anmeldung: **17.09.2003**
(21) Anmeldenummer: 02015189.0
(22) Anmeldetag: 08.07.2002
(51) Int. Cl.: H04Q 11/04

(54) **Übertragungsverfahren und -system für eine Telekommunikationsanlage**

(30) Priorität: 09.07.2001 DE 10133233
(71) Anmelder: Tenovis GmbH & Co. KG, 60326 Frankfurt am Main (DE)
(72) Erfinder: Wagner, Joachim, 35625 Hüttenberg (DE); Villmow, Andre, 65239 Hochheim (DE)

(57) **Zusammenfassung**

Es wird ein Verfahren zum Übertragen von Daten in einer Telekommunikationsanlage vorgeschlagen, wobei die Daten in der Telekommunikationsanlage zwischen Peripherievorrichtungen (Pl, P2, P3) über eine Koppelvorrichtung (10) mittels einer Übertragungsverbindung (60, 70) übertragen werden und ein Datentakt (50) sowie ein Rahmentakt (40) für die zeitliche Steuerung der Übertragung der Daten bereitgestellt sind, mit den Schritten Verarbeiten von Datensträngen zu Übertragungsblöcken, serielles Senden der Übertragungsblöcke auf der Übertragungsverbindung, Empfangen der seriellen Übertragungsblöcke und Verarbeiten der empfangenen Übertragungsblöcke zu parallelen Datensträngen, Umordnen der parallelen Datenstränge und Verarbeiten der umgeordneten Datenstränge zu neuen Übertragungsblöcken und serielles Senden der neuen Übertragungsblöcke auf der Übertragungsverbindung. Des Weiteren wird ein entsprechendes System vorgeschlagen.

## Beschreibung

### TECHNISCHES GEBIET

Die vorliegende Erfindung betrifft ein Verfahren sowie ein System zur Übertragung von Daten, und insbesondere ein Verfahren sowie ein System zur Übertragung von Daten in einer Telekommunikationsanlage.

### ZUGRUNDELIEGENDER STAND DER TECHNIK

Zur schnellen Übertragung von Sprachdaten in Telekommunikationsanlagen, in PC-basierten Sprachverarbeitungsbaugruppen und dergleichen werden beispielsweise sogenannte Highways als Übertragungsmedium verwendet. Die Sprachdaten werden dabei beispielsweise als PCM-codierte (PCM: Pulscodemodulation) digitale Daten übertragen.

Ein Highway umfasst im Wesentlichen drei Leitungsarten. Eine Leitung dient zur Bereitstellung eines Datentaktes (engl.: data clock), beispielsweise 2, 4, 8 oder 16 x 1024 kHz. Eine weitere Leitung dient zur Bereitstellung eines Rahmentakts (engl.: frame clock), beispielsweise 8 kHz. Die dritte Leitungsart dient zur Übertragung der eigentlichen Daten. Es ist zumindest eine Übertragungsleitung vorgesehen. Meistens werden für die Senderichtung und die Empfangsrichtung in einem Telekommunikationssystem jeweils eine Übertragungsleitung verwendet. In einem Zeitfenster von 125 µs (entsprechend einem Rahmentakt von 8 kHz) und bei einer Übertragung von 512 Bit (→ 64 Byte) ergibt sich beispielsweise eine Übertragungsrate von 4096 kbps (Kilobit pro Sekunde) (Datentakt von 4 x 1024 kHz).

Zur Abdeckung der in der Telekommunikationsanlage geforderten Übertragungskapazität wird beispielsweise die entsprechende Anzahl von verwendeten Datenleitungen vergrößert, um das erforderliche Vielfach der Übertragungsrate zu erreichen. Je nach Größe des System (Anzahl der Teilnehmer) oder Menge und Art der zu übertragenden Daten (Sprachdaten, andere Daten (Video oder dergleichen)) kann die Anzahl von erforderlichen Datenleitungen relativ groß werden. So werden in einem Bus nach dem von dem Enterprise Computer Telephony Forum (ECTF) definierten Standards H.100/H.110 beispielsweise 32 Datenleitungen verwendet.

Eine weitere Möglichkeit zur Steigerung der Bandbreite, d.h. der Datenübertragungsrate des Systems ist, den Datentakt zu steigern. Dies ist beispielsweise durch den Einsatz entsprechender Bustechnologien möglich, wie BTL (Bus Transceiver Logic) oder GTL (Gunning Transceiver Logic). Hiermit sind Datentakte weit über den vorstehend genannten, in herkömmlichen Telekommunikationsanlagen verwendeten Datentakten (bis zu 16 x 1024 kHz) möglich. Dazu ist es jedoch erforderlich, die anderen Bausteine und Komponenten der Telekommunikationsanlage (beispielsweise Treiber, Leitungslänge und dergleichen) an die hohe Datentaktrate anzupassen, d.h. es sind Komponenten erforderlich, die den hohen Datentakt verarbeiten können.

### DARSTELLUNG DER ERFINDUNG

Eine Aufgabe der vorliegenden Erfindung besteht darin, ein verbessertes Verfahren und/oder System zur Datenübertragung, insbesondere in einer Telekommunikationsanlage, bereitzustellen.

Diese Aufgabe wird beispielsweise gelöst durch ein Verfahren zum Übertragen von Daten in einer Telekommunikationsanlage, wobei die Daten in der Telekommunikationsanlage zwischen Peripherievorrichtungen über eine Koppelvorrichtung mittels einer Übertragungsverbindung übertragen werden und ein Datentakt sowie ein Rahmentakt für die zeitliche Steuerung der Übertragung der Daten bereitgestellt sind, mit den Schritten Verarbeiten von Datensträngen zu Übertragungsblöcken serielles Senden der Übertragungsblöcke auf der Übertragungsverbindung, Empfangen der seriellen Übertragungsblöcke und Verarbeiten der empfangenen Übertragungsblöcke zu parallelen Datensträngen, Umordnen der parallelen Datenstränge und Verarbeiten der umgeordneten Datenstränge zu neuen Übertragungsblöcken und serielles Senden der neuen Übertragungsblöcke auf der Übertragungsverbindung.

Ferner wird die Aufgabe beispielsweise gelöst durch ein System zur Übertragung von Daten in einer Telekommunikationsanlage, mit einer Vielzahl von Peripherievorrichtungen zum Senden und Empfangen von Daten, einer Koppelvorrichtung zum Weiterleiten und Verarbeiten der Daten, einer Takterzeugungsvorrichtung zur Erzeugung eines Datentakts sowie eines Rahmentakts für die zeitliche Steuerung der Übertragung der Daten und einer Übertragungsverbindung, wobei die Peripherievorrichtungen eingerichtet sind, einen zu sendenden Datenstrang in einen Übertragungsblock zu verarbeiten und den Übertragungsblock auf der Übertragungsverbindung zu der Koppelvorrichtung zu senden, und die Koppelvorrichtung eingerichtet ist, eine Vielzahl von Übertragungsblöcken zu empfangen und diese zu parallelen Datensträngen zu verarbeiten, die parallelen Datenstränge umzuordnen und neue Übertragungsblöcke aus den umgeordneten Datensträngen zu bilden sowie die neuen Übertragungsblöcke seriell auf der auf der Übertragungsverbindung zu den Peripherievorrichtungen zu senden.

Weitere vorteilhafte Ausgestaltungen der Erfindung sind in den jeweiligen abhängigen Patentansprüchen angeführt.

Mittels des erfindungsgemäßen Verfahrens bzw. des erfindungsgemäßen Systems ist es möglich, auf der Peripherievorrichtungsseite zumindest einen Datenstrang durch eine entsprechende Verarbeitungseinrichtung einzulesen, diesen zu komprimieren und einen so erzeugten Übertragungsblock bei einem vorbestimmten Zeitpunkt über die Übertragungsleitung zu senden. Der Übertragungsblock weist dabei eine erste vorbestimmte Zeitdauer auf. Die Zeitsteuerung kann mittels einer Steuerungseinrichtung und den systeminternen Daten- bzw. Rahmentakten erfolgen.

Senden mehrere unterschiedliche Peripherievorrichtungen zu jeweils unterschiedlichen Zeitpunkten in einer zweiten vorbestimmten Zeitdauer, wird auf der Übertragungsverbindung ein Übertragungsblocksatz gebildet, der mehrere seriell angeordnete Übertragungsblöcke umfasst. Dieser Übertragungsblocksatz wird in der Koppelvorrichtung während einer zweiten vorbestimmten Zeitdauer über eine Verarbeitungseinrichtung eingelesen. Die Übertragungsblöcke werden dekomprimiert und die Datenstränge der einzelnen Peripherievorrichtungen werden parallel wiederhergestellt. Die Unterscheidung der Datenstränge (bzw. der Übertragungsblöcke) kann mittels einer mit den systeminternen Daten- bzw. Rahmentakten gekoppelten Steuerungseinrichtung erfolgen.

In der Koppelvorrichtung werden die Datenstränge zwischengespeichert und entsprechend umsortiert, so dass eine Vermittlung eines von einer Peripherievorrichtung stammenden Datenstrangs zu einer anderen Peripherievorrichtung erfolgt. Das heißt, die zeitliche Anordnung der Datenstränge wird so geordnet, dass ihnen jeweils eine Empfangszeit der Empfangs-Peripherievorrichtung zugeordnet ist. Die Datenstränge werden komprimiert, um neue Übertragungsblöcke entsprechend der Umordnung der Datenstränge zu erzeugen. Die neuen Übertragungsblöcke weisen wiederum die erste vorbestimmte Zeitdauer auf. Dann werden die neuen Übertragungsblöcke zu einem neuen Übertragungsblocksatz einer zweiten vorbestimmten Zeitdauer angeordnet und auf der Übertragungsleitung gesendet. Die Komprimierung der Datensätze und die Bildung des Übertragungsblocksatzes erfolgt beispielsweise mittels einer Verarbeitungseinrichtung und einer Steuerungseinrichtung.

Bei einem Übertragungsblock werden beispielsweise bestimmte Startinformationen eingefügt, um den Beginn eines Übertragungsblocksatzes anzuzeigen. Hierdurch kann eine Identifikation und somit die Verarbeitung eines Übertragungsblockssatzes in dem seriellen Datenstrom verbessert werden. In Verbindung mit beispielsweise dem systeminternen Rahmentakt kann so die Übertragung synchronisiert werden.

Ferner können zwischen jeweiligen Übertragungsblöcken Zusatzinformationen für ein Umschalten zwischen den Übertragungsblöcken eingefügt werden. Hierdurch kann gewährleistet werden, dass ein zeitunkritisches Umschalten zwischen Übertragungsblöcken möglich ist, was durch Hinzufügen von Umschaltbits bzw. bedeutungsloser Füllbits einfach erreicht wird.

Des Weiteren können zwischen Übertragungsblocksätzen Zusatzinformationen eingefügt werden, um die Zeitdauer eines Übertragungsblocksatzes auf einen zweiten vorbestimmten Wert zu vergrößern. Hierdurch kann gewährleistet werden, dass die Übertragungsblocksätze immer die zweite vorbestimmte Zeitdauer umfassen, was durch Hinzufügen bedeutungsloser Füllbits einfach erreicht wird.

Vorteilhafterweise sendet immer nur eine Peripherievorrichtung zu einem Zeitpunkt in der vorbestimmten zweiten Zeitdauer einen Übertragungsblock. Hierdurch kann ein störungsfreies Übertragen in dem System erreicht werden.

Die Peripherievorrichtung kann beispielsweise ausgelegt sein, dass immer nur ein Übertragungsblock in einem Übertragungsblocksatz empfangen wird. Es ist aber ebenso möglich, dass mehr als ein Übertragungsblock in einem Übertragungsblocksatz empfangen werden kann. Die Übertragungsblöcke können dabei aufeinanderfolgend sein oder durch Übertragungsblöcke unterbrochen sein, die von anderen Peripherievorrichtungen empfangen werden.

Ein Übertragungsblock kann zu einem Zeitpunkt von einer Peripherievorrichtung empfangen werden, oder gleichzeitig von mehreren Peripherievorrichtungen. Hierdurch kann ein Multidrop-System (ein Sender, mehrere Empfänger) realisiert werden.

Als Übertragungsverfahren kann beispielsweise ein LVDS-Verfahren (Low Voltage Digital Signaling) verwendet werden.

Vorteilhafterweise kann durch Verwendung des erfindungsgemäßen Verfahrens und/oder des erfindungsgemäßen Systems die in einer Telekommunikationsanlage verfügbare Bandbreite (bzw. Übertragungsrate) gesteigert werden, ohne dass hierfür zusätzliche Leitungen erforderlich sind. Dies wird erreicht, indem ein schnelles serielles Übertragungsverfahren in der Telekommunikationsanlage zur Übertragung von parallel vorliegenden Datensträngen (Highways) eingesetzt wird (beispielsweise Zeitmultiplex-Verfahren).

Ferner ist es möglich, die Kompatibilität mit herkömmliche Baugruppen bzw. Komponenten in der Telekommunikationsanlage beizubehalten. Der Datentakt in der Telekommunikationsanlage wird im Vergleich zu herkömmlichen Telekommunikationsanlagen nicht erhöht und somit sind keine besonderen Komponenten für höhere Datentaktraten erforderlich.

Bei bereits bestehenden Telekommunikationsanlagen ist ein "Aufsplitten" der vorhandenen Leitungen und Anschlüsse einer Backplane der Telekommunikationsanlage möglich. Das heißt, die Bandbreite kann auf einfache Weise erhöht werden, indem die vorhandenen Leitungen aufgeteilt werden und das erfindungsgemäße Verfahren/System mit den jeweiligen Leitungsteilen als Übertragungsleitungen angewendet wird. So ist eine Vervielfachung der Bandbreite möglich, ohne dass neue Leitungen hinzugefügt werden müssen.

Ebenso ist es möglich, bei Beibehaltung der Bandbreite die Anzahl der Datenleitungen entsprechend zu vermindern. Zusätzlich kann ein Stecksystem zur physikalischen Verbindung der Leitungen und/oder Komponenten verwendet werden, das eine geringere Anzahl von Polen aufweist als in einer herkömmlichen Telekommunikationsanlage gleicher Bandbreite.

### KURZE BESCHREIBUNG DER FIGUREN

Die Erfindung wird nachstehend anhand von Ausführungsbeispielen unter Bezugnahme auf die Zeichnung näher beschrieben. Es zeigen:
Fig. 1 ein Blockschaltbild eines Telekommunikationssystems,
Fig. 2 ein Blockschaltbild zur Veranschaulichung eines Teils des Telekommunikationssystems gemäß Fig. 1,
Fig. 3 eine Darstellung zur Veranschaulichung einer erfindungsgemäßen Datenübertragung,
Fig. 4 eine Darstellung zur Veranschaulichung einer erfindungsgemäßen Datenübertragung und
Fig. 5 ein Blockschaltbild eines Telekommunikationssystems.

### BESCHREIBUNG DER BEVORZUGTEN AUSFÜHRUNGSBEIPIELE

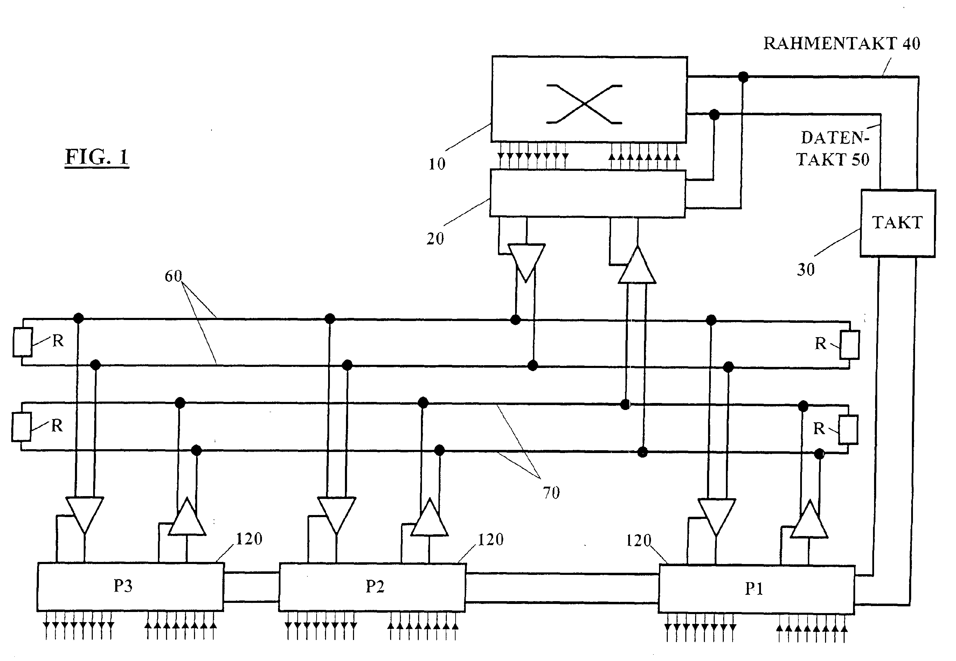

In Fig. 1 ist ein Blockschaltbild einer Telekommunikationsanlage gemäß einem Ausführungsbeispiel der vorliegenden Erfindung gezeigt.

In der Telekommunikationsanlage gemäß Fig. 1 wird als Beispiel ein sogenanntes LVDS-Verfahren (Low Voltage Digital Signaling) zur Datenübertragung verwendet. Das LVDS-Verfahren ist ein Verfahren zur schnellen seriellen Datenübertragung bei geringer Eingangsleistung beispielsweise über Kupferleitungen. Die Vorteile des LVDS-Verfahrens liegen beispielsweise in einem niedrigem Rauschen und einem geringen Übersprechen zwischen benachbarten Leitungen aufgrund niedriger Arbeitsspannungen. Ein Einsatz ist sowohl bei einfachen Punkt-zu-Punkt-Verbindungen als auch bei sogenannten Multidrop-Verbindungen, d.h. Verbindungen zwischen einem Sender und mehreren Empfängern möglich. Im letztgenannten Fall sind jedoch bestimmte Voraussetzungen zu erfüllen (beispielsweise entsprechende Treiber, geringe Eingangskapazitäten). Bei dem LVDS-Verfahren werden für eine Richtung (Senden bzw. Empfangen) jeweils zwei Leitungen (Drähte oder dergleichen) verwendet, die über Abschlusswiderstände (R) zu einer Leitungsschleife verbunden sind.

In Fig. 1 bezeichnet Bezugszeichen 10 eine Koppelvorrichtung bzw. ein Koppelfeld einer Telekommunikationsanlage. Die Koppelvorrichtung 10 dient dazu, Signale bzw. Daten in der Telekommunikationsanlage transparent zu vermitteln und zu verschiedenen Baugruppen der Telekommunikationsanlage durchzuschalten.

Bezugszeichen 20 bezeichnet eine mit der Koppelvorrichtung 10 verbundene Übertragungseinheit. Die Übertragungseinheit 20 übertragt und verarbeitet in geeigneter Weise Signale, die zu und von der Koppelvorrichtung 10 gesendet werden.

Die Koppelvorrichtung 10 und die Übertragungseinheit 20 sind mit einer Takterzeugungseinrichtung 30 verbunden. Die Takterzeugungseinrichtung 30 stellt einen Rahmentakt 40 sowie einen Datentakt 50 bereit. Der Rahmentakt 40 gibt ein Zeitfenster für die Übertragung von Datenpaketen vor, während der Datentakt die Übertragungsrate innerhalb des Zeitfensters bestimmt. Beispiele für Zahlenwerte sind für den Rahmentakt 8 kHz (entspricht einem Zeitfenster von 125 µs) und für den Datentakt 4096 kHz, wobei ersichtlich ist, dass auch andere Taktwerte eingestellt sein können.

Die Übertragungseinheit 20 ist über Treiberstufen (Verstärker) mit einem Leitungspaar 60 und einem Leitungspaar 70 verbunden. Die Leitungspaare 60 und 70 umfassen jeweils 2 Leitungen, die über geeignet dimensionierte Abschlusswiderstände R Leiterschleifen bilden. Die Leitungspaare 60 und 70 stellen Übertragungsleitungen dar, wobei die Übertragungsleitung 60 zur Übertragung von Signalen von der Koppelvorrichtung 10 und der Übertragungseinheit 20 dient und die Übertragungsleitung 70 zur Übertragung von Signalen zu der Koppelvorrichtung 10 und der Übertragungseinheit 20 dient. Für die Übertragungsleitungen wird beispielsweise das vorstehend beschriebene LVDS-Verfahren verwendet.

An die Übertragungsleitungen 60 und 70 sind Peripherievorrichtungen P1, P2, P3 über Treiberstufen (Verstärker) angeschlossen. Ferner sind die Peripherievorrichtungen P1, P2, P3 an die Takterzeugungseinrichtung 30 angeschlossen, die den Rahmentakt 40 und den Datentakt 50 bereitstellt. Die Peripherievorrichtungen P1, P2, P3 umfassen beispielsweise Baugruppen zum Anschluss von Endgeräten und Verbindungsleitungen zu öffentlichen und privaten Netzen und dergleichen. Ferner umfassen die Peripherievorrichtungen P1, P2, P3 Übertragungseinheiten 120, die zur Anbindung der Peripherievorrichtungen an die Übertragungsleitungen 60 und 70 der Telekommunikationsanlage dienen. Dabei dient die Übertragungsleitung 60 zur Übertragung von Signalen zu den jeweiligen Peripherievorrichtungen P1, P2, P3 und die Übertragungsleitung 70 zur Übertragung von den jeweiligen Peripherievorrichtungen P1, P2, P3. Es ist zu beachten, dass zur Vereinfachung lediglich drei Peripherievorrichtungen dargestellt sind. Es ist jedoch möglich, weitere Peripherievorrichtungen in das System hinzuzufügen.

Die bei den Übertragungseinheiten 20 und 120 dargestellten, jeweils acht Hinleitungen und Wegleitungen umfassenden Verbindungen stellen die zu übertragenden Highways der Telekommunikationsanlage dar.

Es ist ersichtlich, dass die in Fig. 1 gezeigte Telekommunikationsanlage neben den gezeigten auch noch andere, allgemein bekannte Vorrichtungen und Baugruppen umfasst, wie beispielsweise eine Energieversorgung, Steuerungsvorrichtungen und dergleichen. Diese sind zur Vereinfachung der Darstellung der Telekommunikationsanlage sowie der Erfindung weggelassen.

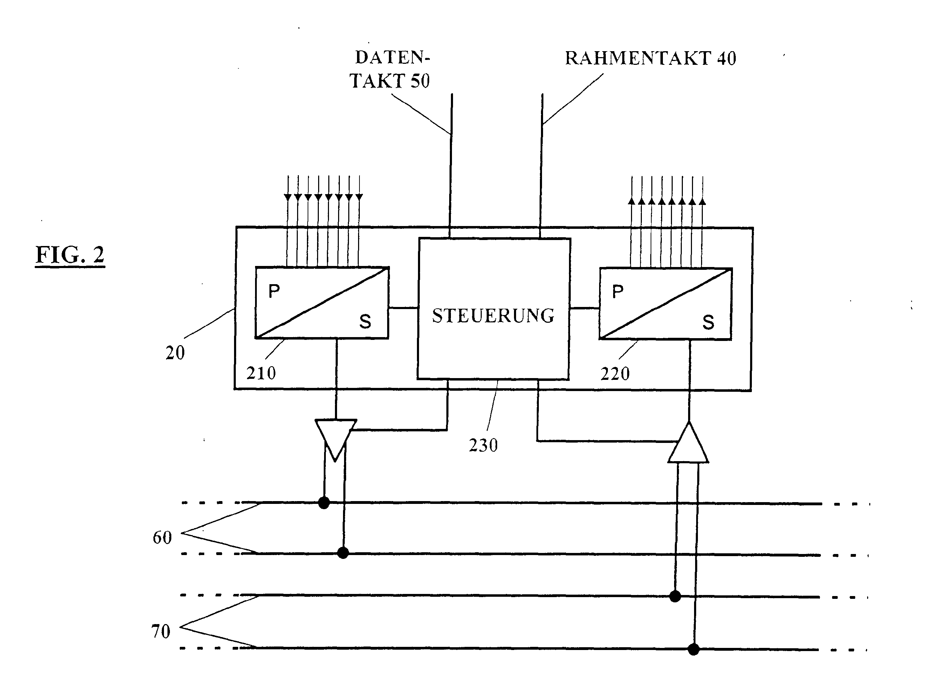

In Fig. 2 ist eine ausführlichere Darstellung der Übertragungseinheit 20 gemäß Fig. 1 gezeigt.

Die Übertragungseinheit 20 der Koppelvorrichtung 10 umfasst Verarbeitungseinrichtungen 210 und 220 sowie eine Steuerungseinrichtung 230. Die Steuerungseinrichtung 230 ist mit den Verarbeitungseinrichtungen 220, 230 sowie mit den Treiberstufen zum Senden und Empfangen zu/von der Übertragungseinheit 20 der Koppelvorrichtung 10 verbunden. Des Weiteren werden der Steuerungseinrichtung 230 der Rahmentakt 40 sowie der Datentakt 50 zugeführt.

Die Verarbeitungseinrichtung 210 ist eingerichtet, zur Übertragung von der Koppelvorrichtung 10 zu der Übertragungsleitung 60 bestimmte Daten geeignet zu verarbeiten. Das heißt, sie wandelt von der Koppelvorrichtung kommende parallele (P) Datenstränge bzw. Highways (in Fig. 2 acht Zufuhrleitungen) in Übertragungsblöcke um (Zuordnen eines Datenstrangs zu einem Übertragungsblock, Komprimieren der Daten, Hinzufügen von Hilfsinformationen) und ordnet diese zu einem seriellen Übertragungsblocksatz (S) an. Der Übertragungsblocksatz wird dann über einen Treiber zu der Übertragungsleitung 60 gesendet.

Demgegenüber ist die Verarbeitungseinrichtung 220 eingerichtet, einen seriellen Übertragungsblocksatz von der Übertragungsleitung 70 (d.h. von den Peripherievorrichtungen P1, P2, P3) über einen Treiber zu empfangen und zu verarbeiten. Das heißt, sie verarbeitet in dem seriellen Übertragungsblocksatz vorhandene Übertragungsblöcke in parallele Datenstränge bzw. Highways (Aufteilen der Übertragungsblöcke und Zuordnen zu Datensträngen, Entfernen von Hilfsinformationen Dekomprimieren), die zu der Koppelvorrichtung 10 weitergeleitet werden (in Fig. 2 acht Leitungen).

Die Steuerungseinrichtung 230 steuert die in den Verarbeitungseinrichtungen 210, 220 vorgenommenen Verarbeitungen sowie das Ein- und Ausschalten der beteiligten Treiber. Hierzu können der zugeführte Rahmentakt 40 und/oder der zugeführte Datentakt 50 verwendet werden. Die Steuerungseinrichtung 230 ist beispielsweise eingerichtet, die Verarbeitung der empfangenen Datenstränge und der empfangenen Übertragungsblöcke mittels des Rahmentakts zu synchronisieren (beispielsweise in einem 125 µs Zeitfenster). Das heißt, die Steuerungseinrichtung 230 erkennt bzw. erzeugt (in Abhängigkeit davon, ob empfangen oder gesendet wird) einen Rahmenbeginn und kann somit den Beginn eines Übertragungsblocksatzes mit einer bestimmten Anzahl von Übertragungsblöcken bestimmen. Zusätzliche Hilfsinformationen bei den Übertragungsblöcken, wie beispielsweise bestimmte Umschaltbits, ermöglichen ein einfaches Erkennen des Beginns eines Übertragungsblocks (und damit eines Highways).

Der Aufbau und die Funktion der Übertragungseinheiten 120 der Peripherievorrichtungen ist im Wesentlichen dem vorstehend beschriebenen ähnlich. Dabei ist natürlich zu beachten, dass von der Übertragungsleitung 60 empfangen wird und zu der Übertragungsleitung 70 gesendet wird. Des Weiteren ist ein Unterschied, dass die entsprechenden Steuerungseinrichtungen und Verarbeitungseinrichtungen der Übertragungseinheiten 120 lediglich ihnen zugeordnete Datenstränge (Highways) empfangen bzw. senden. Anders ausgedrückt, die Steuerungseinrichtungen und Verarbeitungseinrichtungen der Übertragungseinheiten 120 verarbeiten nur während eines den zugeordneten Datensträngen entsprechenden Teils der durch den Rahmentakt 40 vorgegebenen Zeitdauer Daten, wohingegen Steuerungseinrichtung und Verarbeitungseinrichtungen der Übertragungseinheit 20 während der gesamten, durch den Rahmentakt 40 vorgegebenen Zeitdauer Daten verarbeiten. Beispielsweise werden mit den Übertragungseinheiten 120 (bzw. den Peripherievorrichtungen P1, P2, P3) verbundenen Treiber lediglich zu diesen Zeiten eingeschaltet.

Die Steuerungseinrichtungen der Übertragungseinheiten 20 und 120 können als einzelne Einheiten ausgeführt sein, oder aber in einer einzelnen Steuerungsvorrichtung zusammengeführt sein. Die einzelne Steuerungsvorrichtung kann beispielsweise Teil einer allgemeinen Steuerungsvorrichtung der Telekommunikationsanlage sein.

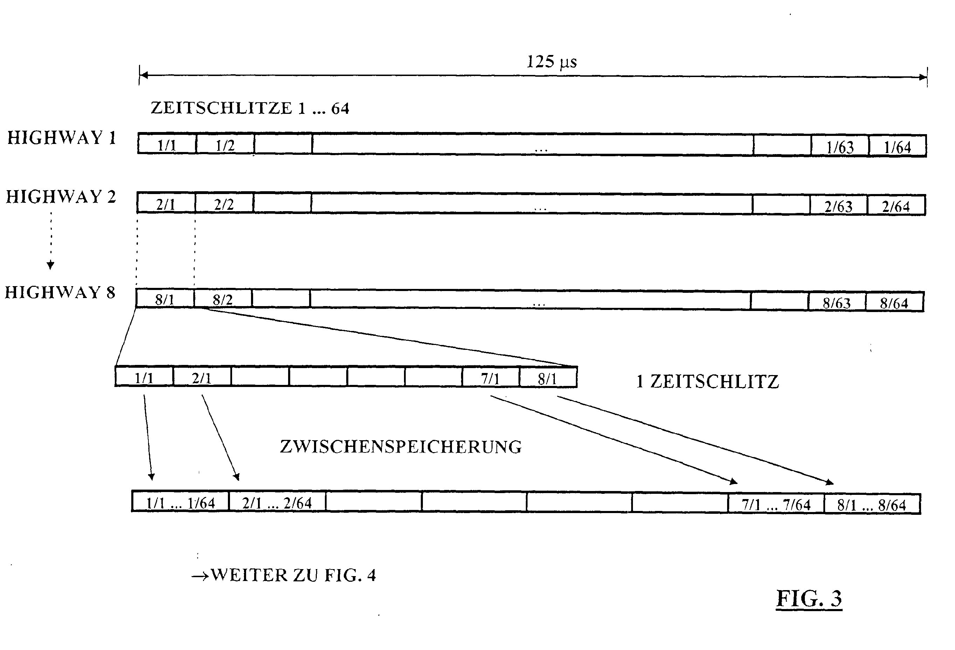

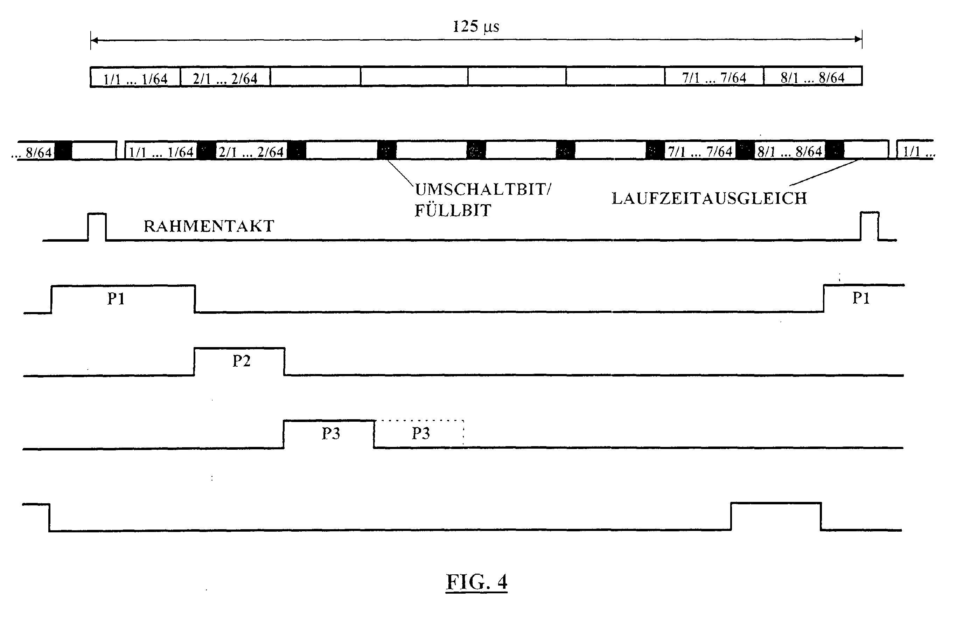

Die Arbeitsweise des vorstehend unter Bezugnahme auf die Figuren 1 und 2 beschriebenen erfindungsgemäßen Systems und des erfindungsgemäßen Verfahrens ist nachstehend unter Bezugnahme auf die Figuren 3 und 4 näher beschrieben.

In den Figuren 3 und 4 sind in dem System gemäß Fig. 1 zu übertragende Daten in einer zeitlichen Darstellung aufgezeigt.

Bei dem in den Figuren 3 und 4 dargestellten Beispiel wird von einem Rahmentakt von 8 kHz (entspricht einer vorbestimmten Zeitdauer von 125 µs) und einem Datentakt von 4096 kHz ausgegangen. Es werden acht Highways (d.h. acht Datenstränge) in dem System übertragen. Ein Datenstrang umfasst beispielsweise 64 Byte, woraus sich eine Übertragungsrate pro Highway von 4,096 Mbps (Megabit pro sek.) ergibt.

Als "Startpunkt" für die weitere Beschreibung wird von der Schnittstelle zwischen dem Koppelfeld 10 und der Verarbeitungseinrichtung 210 der Übertragungseinheit 20 gemäß Fig. 2 ausgegangen

Wie es in Fig. 3 veranschaulicht ist, sind acht Datenstränge (Highways 1 bis 8) in dem System vorhanden. Die vorbestimmte Zeitdauer von 125 µs ist in 64 Zeitschlitze aufgeteilt, in denen jeweils ein Byte (=8 Bit) untergebracht wird (1/1...1/64;...;8/1...8/64). Die acht Highways werden über die acht Zuleitungen der Verarbeitungseinrichtung 210 zugeführt.

In der Verarbeitungseinrichtung 210 liegen nun zu einem Zeitpunkt (bzw. einem Zeitschlitz) acht Byte (1/1...8/1) vor. Für die weitere Verarbeitung werden die aufeinanderfolgend ankommenden Daten in einem (nicht gezeigten) Speicher zwischengespeichert. Ist eine vorbestimmte Zeitdauer von 125 µs (d.h. ein Rahmen des Rahmentakts) beendet, liegen in der Verarbeitungseinrichtung 210 folglich 8 * 64 Byte vor. Um diese in einem entsprechenden Zeitfenster seriell zu übertragen (Zeitpultiplex), ist eine Komprimierung der Daten erforderlich, was in der Verarbeitungseinrichtung 210 ausgeführt wird. Dabei werden die parallel empfangenen Daten der einzelnen Datenstränge so zusammengesetzt, dass ein kompletter Datenstrang einen Übertragungsblock bildet (1/1...1/64;...;8/1...8/64).

In Fig. 4 ist der weitere Ablauf der erfindungsgemäßen Übertragung beschrieben. (Zur Verdeutlichung der Zusammenhänge ist die letzte Zeile aus Fig. 3 in der ersten Zeile der Fig. 4 wiederholt dargestellt.)

In dem hier veranschaulichten Beispiel werden die Datenstränge (bzw. Highways) soweit komprimiert, dass neben den hierdurch gebildeten Übertragungsblöcken noch Hilfsinformationen in der vorbestimmten Zeitdauer von 125 µs untergebracht werden können. Dabei weist jeder komprimierte Übertragungsblock eine gleiche vorbestimmte Zeitdauer auf (beispielsweise 1/10 der vorbestimmten Zeitdauer von 125 µs). Zu Beginn eines Übertragungsblocksatzes (der in dem Beispiel 8 Übertragungsblöcke umfasst) wird durch die Verarbeitungseinrichtung 210 vorzugsweise eine Startinformation (Startbit, Synchronwort) eingefügt, durch die in Verbindung mit dem Rahmentakt das System synchronisiert werden kann. Zwischen einzelnen Übertragungsblöcken werden durch die Verarbeitungseinrichtung 210 Umschaltbits bzw. bedeutungslose Füllbits hinzugefügt, durch die ein genaues Zuordnen der Übertragungsblocks sowie ein zeitunkritisches Umschalten der beteiligten Treiber ermöglicht wird.

Die Gesamtlänge eines Übertragungsblocksatzes ergibt sich somit aus der Länge der (acht) komprimierten Übertragungsblöcke und aus der Länge der hinzugefügten Startinformation und Umschaltbits bzw. Füllbits. Damit ein Übertragungsblocksatz der vorbestimmten Zeitdauer von 125 µs entspricht, ist die Verarbeitungseinrichtung 210 eingerichtet, einen entsprechenden Laufzeitausgleich am Ende eines Übertragungsblocksatzes hinzuzufügen, um den vorbestimmten Wert zu erreichen.

Durch die vorstehende Verarbeitung der parallelen Datenstränge kann eine Nutzdatenübertragungsrate von 8 * 64 Byte/125 µs = 32,788 Mbps erreicht werden.

Die derart verarbeiteten Datenstränge (Highways) werden nun über die Übertragungsleitung 60 als Übertragungsblocksatz gesendet. Die Peripherievorrichtungen können mittels ihrer Übertragungseinheiten 120 den Übertragungsblocksatz empfangen. Dabei sind die entsprechenden Treiber vorzugsweise so gesteuert, dass nur zu Zeitpunkten, bei denen zugeordnete Highways bzw. entsprechende Übertragungsblöcke in der vorbestimmten Zeitdauer von 125 µs vorliegen, die Übertragungseinheit 120 der jeweiligen Peripherievorrichtung P1, P2, P3 empfängt. Durch die zwischen den Übertragungsblöcken eingefügten Umschaltbits kann jede Peripherievorrichtung zeitunkritisch empfangsbereit geschaltet werden (dargestellt als entsprechende Empfangsphase einer Peripherievorrichtung). Die Zeitsteuerung wird dabei über den Rahmentakt sowie vorzugsweise die in dem Übertragungsblocksatz vorhandene Startinformation synchronisiert.

Der Empfangsablauf in einer der Übertragungseinrichtungen 120 ist umgekehrt zu dem Sendeablauf der Übertragungseinheit 20. Das heißt, eine entsprechende Verarbeitungseinrichtung der Übertragungseinheit 120 entfernt Hilfsinformationen (Startinformation, Füllbits) aus den empfangenen Daten bei einem zugeordneten Übertragungsblock, dekomprimiert den Übertragungsblock und erhält so den ursprünglichen Datenstrang (Highway). Dieser wird dann beispielsweise an ein angeschlossenes Endgerät oder dergleichen weitergeleitet.

Der Sendeablauf in umgekehrter Richtung (d.h. von den Peripherievorrichtungen P1, P2, P3 zu der Koppelvorrichtung 10) erfolgt auf ähnliche Weise. Der Unterschied ist dabei im Wesentlichen, dass der seriell gesendete Übertragungsblocksatz nicht von einer Übertragungseinheit 120 erzeugt wird, sondern im Zusammenspiel aller Übertragungseinheiten 120 erzeugt wird. Das heißt, jede Übertragungseinheit 120 erzeugt mit einer entsprechenden Verarbeitungseinrichtung aus einem beispielsweise von einem Endgerät empfangenen Datenstrang einen Übertragungsblock einer vorbestimmten Länge. Umschaltbits bzw. Füllbits werden hinzugefügt. Zusätzlich ist eine der Übertragungseinheiten in der Lage, die Startinformation am Anfang ihres Übertragungsblocks hinzuzufügen (beispielsweise Peripherievorrichtung P1).

Unter der Steuerung entsprechender Steuerungseinrichtungen senden die jeweiligen Übertragungseinheiten 120 ihren Teil des Übertragungsblocksatzes zu einem bestimmten Zeitpunkt, wobei die Steuerungseinrichtungen mittels des Rahmentaktes synchronisiert werden. Anders ausgedrückt, äquivalent zu den Empfangsphasen weist jede Peripherievorrichtung eine einem Highway zugeordnete Sendephase auf, zu der sie den Übertragungsblock senden kann. Vorzugsweise ist zu einem Zeitpunkt immer nur eine Peripherievorrichtung als Sendevorrichtung aktiv, um Störungen in der Übertragung zu vermeiden.

Auf der Übertragungsleitung 70 wird so ein serieller Übertragungsblocksatz durch das aufeinanderfolgende Senden der Übertragungsblöcke durch die Peripherievorrichtungen P1, P2, P3 gebildet. Dieser Übertragungsblocksatz wird von der Übertragungseinheit 20 der Koppelvorrichtung 10 vollständig empfangen und ausgewertet. Das heißt, der Übertragungsblocksatz wird durch die Verarbeitungseinrichtung 220 unter Zuhilfenahme der Umschaltbits in die Übertragungsblöcke aufgeteilt, die Hilfsinformationen werden entfernt und die Übertragungsblöcke werden zu den Datensträngen dekomprimiert. Die Datenstränge (Highways) werden parallel zu der Koppelvorrichtung 10 weitergeleitet, in der entsprechende Verarbeitungen (Vermittlung, Umsortierung) durchgeführt werden. Anschließend werden die umsortierten Datensätze von der Koppelvorrichtung zu der Verarbeitungseinrichtung 210 weitergeleitet.

Die Koppelvorrichtung (und damit die Übertragungseinheit 20) sendet und empfängt auf allen Highways (acht Highways gemäß Fig. 1), während die Peripheriebaugruppen jeweils nur auf den ihnen zugeordneten Highways senden bzw. empfangen. Die Zuordnung der Highways zu Peripherievorrichtungen kann gemäß Fig. 1 mittels einer Softwareeinstellung durch eine (nicht gezeigte) Steuerungsvorrichtung erfolgen. Das heißt, die Zuordnung kann fest (ein bestimmter Highway ist immer einer bestimmten Peripherievorrichtung zugeordnet) oder flexibel sein (ein Highway ist aufeinanderfolgend unterschiedlichen Peripherievorrichtungen zugeordnet). Ferner ist es möglich, dass lediglich ein einzelner Highway einer Peripherievorrichtung zugeordnet ist, oder dass mehrere Highways einer Peripherievorrichtung zugeordnet sind. Dies ist beispielsweise mit der gestrichelten Linie bei der Peripherievorrichtung P3 angezeigt. Des Weiteren können empfangsseitig ein Highway oder mehrere Highways gleichzeitig von mehreren Peripherievorrichtungen empfangen werden (Multidrop-System).

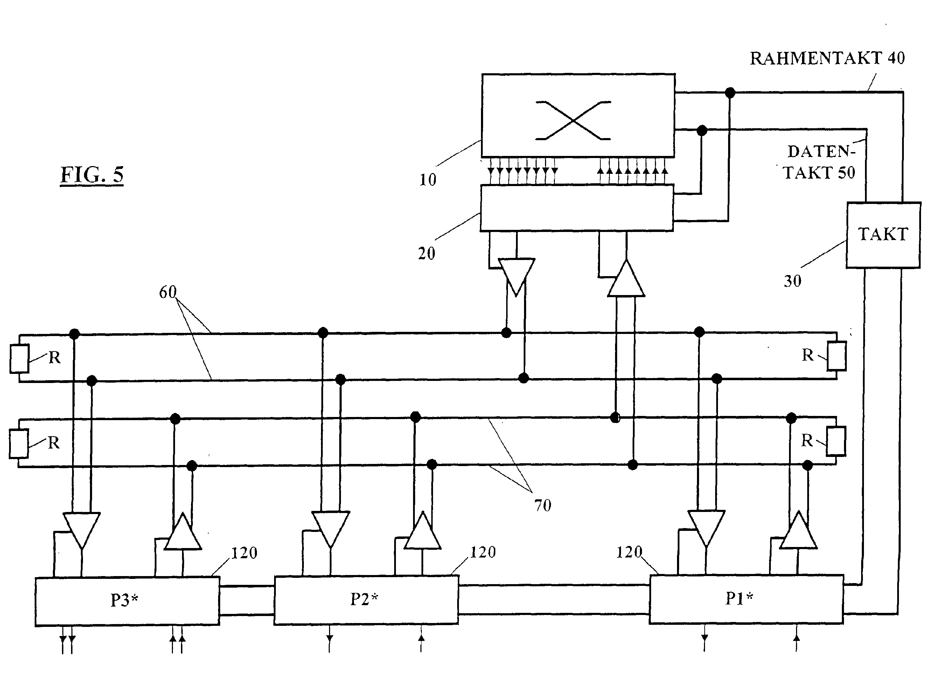

In Fig. 5 ist eine Modifikation des in Fig. 1 gezeigten Systems dargestellt. Gleiche Bezugszeichen bezeichnen dabei gleiche Elemente, und auf eine nähere Beschreibung wird hier verzichtet.

Der Unterschied zwischen dem in Fig. 1 dargestellten System und dem in Fig. 5 dargestellten System liegt in einem unterschiedlichen Aufbau von Peripherievorrichtungen. Peripherievorrichtungen P1*, P2*, P3* umfassen jeweils eine Übertragungseinheit 121. Der Aufbau der Übertragungseinheit 121 ist dabei im Wesentlichen äquivalent zu dem in Verbindung mit Fig. 2 beschriebenen Aufbau. Im Unterscheid hierzu erfolgt die Zuordnung der Highways bei den Peripherievorrichtungen nicht durch eine Steuerungsvorrichtung mittels Software, sondern die Zuordnung ist fest mittels Hardwareeinstellung kodiert (beispielsweise Highway 2 wird immer von Steckplatz 2 ausgelesen). Das heißt, die Übertragungseinheit 121 weist lediglich eine Hinleitung und eine Wegleitung für einen Highway auf. Dies vereinfacht den Systemaufbau und ermöglicht eine kostengünstige Implementierung des Systems.

Es ist ersichtlich, dass auch in dem Fall gemäß Fig. 5 mehr als ein Highway einer Peripherievorrichtung zugeordnet sein kann. Beispielsweise können der Peripherievorrichtung P3* zwei Highways fest zugeordnet sein, weshalb jeweils zwei Hinleitungen und zwei Wegleitungen vorhanden sind. Die Empfangsphase der Peripherievorrichtung P3* ist dann wie die in Fig. 4 gezeigte Empfangsphase der Peripherievorrichtung P3.

Neben der vorstehend beschriebenen Anzahl von acht Highways und vier (bzw. zwei) Übertragungsleitungen ist es ersichtlich, dass beliebige Vielfache hiervon in einem erfindungsgemäßen Übertragungssystem verwendet werden können.

Mit dem erfindungsgemäßen Verfahren und/oder System ist eine weitere Steigerung der Bandbreite, d.h. eine Übertragung von mehr Datensträngen bzw. Highways oder von Highways mit höherer Datenrate (Datentakt), ebenso möglich wie eine Reduzierung der Anzahl der erforderlichen Datenleitungen. Dies kann durch nochmalige Verdopplung der Übertragungsrate und Übertragung der Sende- und Empfangsdaten (aus Sicht der Koppelvorrichtung) im Zeitmultiplexverfahren erfolgen. Die erreichbare Obergrenze wird durch die Verhältnisse im System bzw. in der Telekommunikationsanlage (d.h. beispielsweise durch Leistungsgrenzen und Anzahl des verwendeten Stecksystems und der Leitungsführung und dergleichen) sowie durch die verwendeten Treiber und Empfänger (d.h. beispielsweise durch die Treiberleistungsfähigkeit, durch die kapazitive Belastung, durch die Leitungslänge und dergleichen) bestimmt.

Zur Auswertung des seriellen Datenstroms werden vorzugsweise hochfrequente PLL-Schaltungen (PLL: phase locked loop) eingesetzt, die die Auswertung nach Erkennen des Startzeitpunkts (Startbits, Umschaltbits, Zeitmessung) zu einem idealen Abtastzeitpunkt auch bei sehr kurzen Bitlängen ermöglichen.

Des Weiteren ist es, wenn von einer Peripherievorrichtung keine Nutzdaten gesendet werden sollen, beispielsweise möglich, in dem zugeordneten Zeitfenster stattdessen bedeutungslose Füllbits mit entsprechenden Startbits zu senden. Hierdurch wird ein undefinierter Signalzustand in dem System vermieden und die Synchronisation in dem System vereinfacht.

Ferner ist es ersichtlich, dass neben den vorstehend genannten Taktraten für den Rahmentakt 40 und den Datentakt 50 auch andere Taktraten eingesetzt werden können, d.h. unterschiedliche Zeitfenster vorgesehen sein können.

Wie es vorstehend beschrieben ist, wird LVDS als Übertragungsverfahren eingesetzt. Es ist jedoch ebenso möglich, ein anderes Übertragungsverfahren einzusetzen, das eine schnelle serielle Datenübertragung ermöglicht.

Wie es vorstehend beschrieben ist, wird ein Verfahren zum Übertragen von Daten in einer Telekommunikationsanlage vorgeschlagen, wobei die Daten in der Telekommunikationsanlage zwischen Peripherievorrichtungen 120, P1, P2, P3 über eine Koppelvorrichtung 10, 20 mittels einer Übertragungsverbindung 60, 70 übertragen werden und ein Datentakt 50 sowie ein Rahmentakt 40 für die zeitliche Steuerung der Übertragung der Daten bereitgestellt sind, mit den Schritten Verarbeiten von Datensträngen zu Übertragungsblöcken, serielles Senden der Übertragungsblöcke auf der Übertragungsverbindung, Empfangen der seriellen Übertragungsblöcke und Verarbeiten der empfangenen Übertragungsblöcke zu parallelen Datensträngen, Umordnen der parallelen Datenstränge und Verarbeiten der umgeordneten Datenstränge zu neuen Übertragungsblöcken und serielles Senden der neuen Übertragungsblöcke auf der Übertragungsverbindung. Des Weiteren wird ein entsprechendes System vorgeschlagen.

## Patentansprüche

1. Verfahren zum Übertragen von Daten in einer Telekommunikationsanlage, wobei die Daten in der Telekommunikationsanlage zwischen Peripherievorrichtungen (120, P1, P2, P3) über eine Koppelvorrichtung (10, 20) mittels einer Übertragungsverbindung (60, 70) übertragen werden und ein Datentakt (50) sowie ein Rahmentakt (40) für die zeitliche Steuerung der Übertragung der Daten bereitgestellt sind, mit den Schritten:
Verarbeiten von Datensträngen zu Übertragungsblöcken,
serielles Senden der Übertragungsblöcke auf der Übertragungsverbindung,
Empfangen der seriellen Übertragungsblöcke und Verarbeiten der empfangenen Übertragungsblöcke zu parallelen Datensträngen,
Umordnen der parallelen Datenstränge und Verarbeiten der umgeordneten Datenstränge zu neuen Übertragungsblöcken und
serielles Senden der neuen Übertragungsblöcke auf der Übertragungsverbindung.

2. Verfahren nach Anspruch 1, wobei die Schritte zum Verarbeiten der Datenstränge zu Übertragungsblöcke und zum Senden der Übertragungsblöcke die Unterschritte umfassen:
Einlesen zumindest eines Datenstrangs bei einer Peripherievorrichtung sowie
Komprimieren des zumindest einen eingelesenen Datenstrangs zu zumindest einem Übertragungsblock einer ersten vorbestimmten Zeitdauer, und
Senden des zumindest einen Übertragungsblocks auf der Übertragungsverbindung bei einem vorbestimmten Zeitpunkt in einer vorbestimmten zweiten Zeitdauer.

3. Verfahren nach Anspruch 1 oder 2, wobei der Schritt zum Empfangen der seriellen Übertragungsblöcke und Verarbeiten der empfangenen Übertragungsblöcke zu parallelen Datensträngen die Unterschritte umfasst:
Einlesen eines eine Vielzahl von Übertragungsblöcken umfassenden Übertragungsblocksatzes während einer zweiten vorbestimmten Zeitdauer in die Koppelvorrichtung und
Dekomprimieren und Umwandeln der Vielzahl von Übertragungsblöcke in parallele Datenstränge.

4. Verfahren nach einem der vorhergehenden Ansprüche,
wobei der Schritt zum Umordnen der parallelen Datenstränge und Verarbeiten der umgeordneten Datenstränge zu neuen Übertragungsblöcken die Unterschritte umfasst:
Anordnen und Zwischenspeichern der parallelen Datenstränge in der Koppelvorrichtung, so dass sie einer Empfangszeit einer der Peripherievorrichtungen zugeordnet sind,
Komprimieren der zwischengespeicherten Datenstränge zu neuen Übertragungsblöcken einer ersten vorbestimmten Zeitdauer,
Anordnen der neuen Übertragungsblöcke zu einem neuen Übertragungsblocksatz einer zweiten vorbestimmten Zeitdauer.

5. Verfahren nach einem der vorhergehenden Ansprüche,
wobei bei einem Übertragungsblock bestimmte Startinformationen eingefügt werden, um den Beginn eines Übertragungsblocksatzes anzuzeigen.

6. Verfahren nach einem der vorhergehenden Ansprüche,
wobei zwischen Übertragungsblöcken Zusatzinformationen für ein Umschalten zwischen den Übertragungsblöcken eingefügt werden.

7. Verfahren nach Anspruch 3 oder 4, wobei zwischen Übertragungsblocksätzen Zusatzinformationen eingefügt werden, um die Zeitdauer eines Übertragungsblocksatzes auf einen zweiten vorbestimmten Wert zu vergrößern.

8. Verfahren nach Anspruch 2, wobei nur eine Peripherievorrichtung zu dem vorbestimmten Zeitpunkt in der vorbestimmten zweiten Zeitdauer einen Übertragungsblock sendet.

9. Verfahren nach Anspruch 5, wobei der Empfang des zumindest eines Übertragungsblocks bei den Peripherievorrichtungen durch den Rahmentakt und eine Startinformation synchronisiert ist.

10. Verfahren nach Anspruch 9, wobei die Peripherievorrichtungen zwei oder mehr Übertragungsblöcke empfangen.

11. Verfahren nach einem der vorhergehenden Ansprüche,
wobei ein Übertragungsblock von zumindest einer Peripherievorrichtung empfangen wird.

12. Verfahren nach einem der vorhergehenden Ansprüche,
wobei ein LVDS-Verfahren zur Übertragung verwendet wird.

13. System zur Übertragung von Daten in einer Telekommunikationsanlage, mit
einer Vielzahl von Peripherievorrichtungen (120, P1, P2, P3) zum Senden und Empfangen von Daten,
einer Koppelvorrichtung (10, 20) zum Weiterleiten und Verarbeiten der Daten,
einer Takterzeugungsvorrichtung (30) zur Erzeugung eines Datentakts (50) sowie eines Rahmentakts (40) für die zeitliche Steuerung der Übertragung der Daten und
einer Übertragungsverbindung (60, 70),
wobei
die Peripherievorrichtungen eingerichtet sind, einen zu sendenden Datenstrang in einen Übertragungsblock zu verarbeiten und den Übertragungsblock auf der Übertragungsverbindung zu der Koppelvorrichtung zu senden, und
die Koppelvorrichtung eingerichtet ist, eine Vielzahl von Übertragungsblöcken zu empfangen und diese zu parallelen Datensträngen zu verarbeiten, die parallelen Datenstränge umzuordnen und neue Übertragungsblöcke aus den umgeordneten Datensträngen zu bilden sowie die neuen Übertragungsblöcke seriell auf der auf der Übertragungsverbindung zu den Peripherievorrichtungen zu senden.

14. System nach Anspruch 13, wobei jede Peripherievorrichtung (120, P1, P2, P3)
eine Verarbeitungseinrichtung und
eine Steuerungseinrichtung umfasst,
wobei die Verarbeitungseinrichtung eingerichtet ist, zumindest einen Datenstrang einzulesen und diesen zu zumindest einem Übertragungsblock einer ersten vorbestimmten Zeitdauer zu komprimieren, und die Steuerungseinrichtung eingerichtet ist, ein Steuerungssignal in Abhängigkeit des Datentakts und des Rahmentakts auszugeben, das die Verarbeitungseinrichtung veranlasst, den Übertragungsblock zu einem vorbestimmten Zeitpunkt in einer vorbestimmten zweiten Zeitdauer zu senden.

15. System nach einem der Ansprüche 13 und 14, wobei die Koppelvorrichtung (10, 20)
eine Verarbeitungseinrichtung (210, 220) und
eine Steuerungseinrichtung (230) umfasst,
wobei die Verarbeitungseinrichtung eingerichtet ist, einen Übertragungsblocksatz mit einer Vielzahl von seriell übertragenen Übertragungsblöcken während einer zweiten vorbestimmten Zeitdauer zu empfangen sowie die Vielzahl von Übertragungsblöcken zu dekomprimieren und in eine Vielzahl parallelen Datensträngen zu verarbeiten, und die Steuerungseinrichtung eingerichtet ist, Steuerungssignale in Abhängigkeit des Datentakts und des Rahmentakts auszugeben, um die Verarbeitung der Vielzahl von Übertragungsblöcken zu steuern.

16. System nach einem der Anspruch 15, wobei in der Koppelvorrichtung die Vielzahl von Datensträngen umgeordnet wird, dass sie einer Empfangszeit einer Peripherievorrichtung zugeordnet sind, die umgeordneten Datenstränge zwischengespeichert werden und die Verarbeitungseinrichtung (210) die Datenstränge zu neuen Übertragungsblöcken einer ersten vorbestimmten Zeitdauer komprimiert sowie die neuen Übertragungsblöcke unter der Steuerung der Steuerungseinrichtung zu einem neuen Übertragungsblocksatz einer zweiten vorbestimmten Zeitdauer anordnet.

17. System nach einem der Ansprüche 13 bis 16, wobei bei einem Übertragungsblock bestimmte Startinformationen eingefügt werden, um den Beginn eines Übertragungsblocksatzes anzuzeigen.

18. System nach einem der Ansprüche 13 bis 17, wobei zwischen Übertragungsblöcken Zusatzinformationen für ein Umschalten zwischen den Übertragungsblöcken eingefügt werden.

19. System nach Anspruch 15 oder 16, wobei zwischen Übertragungsblocksätzen Zusatzinformationen eingefügt werden, um die Zeitdauer eines Übertragungsblocksatzes auf einen zweiten vorbestimmten Wert zu vergrößern.

20. System nach Anspruch 14, wobei nur eine Peripherievorrichtung zu dem vorbestimmten Zeitpunkt in der vorbestimmten zweiten Zeitdauer einen Übertragungsblock sendet.

21. System nach Anspruch 16, wobei der Empfang des zumindest eines Übertragungsblocks bei den Peripherievorrichtungen durch den Rahmentakt und eine Startinformation synchronisiert ist.

22. System nach Anspruch 21, wobei die Peripherievorrichtungen zwei oder mehr Übertragungsblöcke empfangen.

23. System nach einem der Ansprüche 13 bis 22, wobei ein Übertragungsblock von zumindest einer Peripherievorrichtung empfangen wird.

24. System nach einem der Ansprüche 13 bis 23, wobei ein LVDS-Verfahren zur Übertragung verwendet wird.
